Europäisches Patentamt

European Patent Office

Office européen des brevets

(19)

(11) Publication number: **0 125 848**
A2

(12) **EUROPEAN PATENT APPLICATION**

(21) Application number: **84303019.8**

(22) Date of filing: **04.05.84**

(51) Int. Cl.³: **E 05 B 49/00**

(30) Priority: **09.05.83 ZA 833294**
**21.02.84 ZA 841243**

(43) Date of publication of application:
**21.11.84 Bulletin 84/47**

(84) Designated Contracting States:
**AT BE CH DE FR GB IT LI LU NL SE**

(71) Applicant: **Papsi Systems (Proprietary) Limited**
**Triomf House Empire Road**
**Milpark Transvaal Province(ZA)**

(72) Inventor: **Papsdorf, Kurt Rolf**
**Farm 152**
**Broederstroom Transvaal Province(ZA)**

(74) Representative: **Dixon, Donald Cossar et al,**
**Gee & Co. Chancery House Chancery Lane**
**London WC2A 1QU(GB)**

(54) **Electronic activator and sensor assembly.**

(57) An activator (1) and co-operant sensor assembly (5) for periodic coupling to provide closure of a circuit for achieving access to premises, or a vehicle, or for arming and disarming of a security alarm, optionally simultaneously, is disclosed.

The activator has an array of electrically conductive paths (2) thereon, wherein the array is of a unique character. Conveniently, the array can correspond to the ridges or valleys of a person's finger or toe print. The array of conductive paths co-operates with pairs of contacts (23) in the sensor to close one or more circuits simultaneously when operatively coupled. At least one contact of a pair thereof is spaced from the other contact of such pair in both a longitudinal and transverse direction of the activator.

FIG. 4

EP 0 125 848 A2

0125848

ELECTRONIC ACTIVATOR AND SENSOR ASSEMBLY

THIS INVENTION relates to an electronic activator and co-operant sensor assembly for use particularly, but not exclusively, in providing access to premises, motor vehicles, or as a switching assembly for providing energisation of required circuits such as the various electrical circuits of a motor vehicle.

There are numerous applications in which the holder of an activator or "key" can, by reason of the particular co-operation between the activator or key and a co-operant sensor or follower assembly, obtain access to premises by way of a door locked, but for the co-operation of the activator or key and the sensor or switch required circuits by reason of such co-operation. One such application which is non-limiting on the scope of the invention is in the disarming of security installations simultaneously with an unlocking or other switching function. One particular application is in the arming and disarming of motor vehicle burglar alarm systems simultaneously with the switching of motor vehicle electrical circuits.

Numerous different activator or key arrangements have been proposed heretofore for co-operation with specially designed sensor arrangements and wherein each activator is unique relative to other similar activators. Thus, for example, a purely mechanical arrangement is a key and tumbler cylinder arrangement. Another is a key having magnets located in predetermined positions for activating magnetically operated switches. Still other arrangements have electrically insulating boards with conductive patches therethrough which connect normally open contacts located on each side of the board and/or open normally closed contacts by separating them.

The latter arrangement is difficult to implement practically and to fabricate the required parts.

It is the object of this invention to provide an activator and co-operant sensor assembly which may be easier to manufacture to a substantially unique design.

In accordance with one aspect of the invention there is provided an activator having both a longitudinal and transverse dimension and co-operant sensor assembly, the activator being removably receivable by the sensor and having a surface thereof carrying a planar array of electrically conductive paths thereon, at least some of which are electrically isolated from others, the sensor having at least two contacts for engagement with said electrically conductive paths to close a circuit between said contacts when the activator is received in the sensor, at least one of said contacts being located in a spaced position relative to the other contact in the directions of both the longitudinal and transverse dimensions of the activator.

Further features of the activator provide for the array of electrically conductive paths to be a unique array in respect of any one or more selected sensors; for the array of electrically conductive paths to correspond to the ridges or valleys of at least a part of a persons finger print or other area of skin having a unique arrangement of ridges and valleys or, alternatively, for the array of electrically conductive paths to be randomly generated by a computer, for example, or to correspond to part of the random fibres of a mat or pad thereof; for the electrically conductive paths to be carried on a flat electrically insulating board or card; and for the electrically conductive paths to be formed by the photographic transfer of a required pattern corresponding to that of the electrically conductive paths onto a printed circuit board which then serves as the activator.

Still further features of the activator provide for there to be a row of terminals arranged along a leading edge or end to the activator and at least some of which terminals are electrically connected to at least some of the electrically conductive paths, said terminals being adapted for electrical association with a co-operating series of contact terminals provided on the sensor when the activator is received therein; and for the activator unit to have cam or cam follower formations for co-operation with cam follower or cam formations on a biased movable contact unit forming part of the sensor.

Further features of the sensor provide for there to be a plurality of pairs of contacts with the members of each pair to be interconnected by way of an electrically conductive path on the activator; for either one or both members of one or more pairs of contacts to be spaced in said longitudinal and transverse directions relative to another contact; for said spaced contacts to be carried on a contact unit; for the contact unit to be movable and to be biased towards the activator in its received position in the sensor with a cam or cam follower arrangement being provided for holding the said contacts away from the conductive paths during movement of the activator into and out of its received position in the sensor; and for the sensor to have a slot for receiving an activator in the form of a board or card having the electrically conductive paths on one or both faces thereof.

It will be understood that the above defined activator and sensor assembly can be employed for effecting any required switching function without limitation. However, in its presently preferred application, the assembly is embodied in a security device for providing the switching functions required to gain access to premises or to complete electrical circuits required to enable a motor vehicle to be operated and optionally, to arm and dis-arm an alarm installation which may embody a delay timer.

Various different circuits can be switched simultaneously using an activator and sensor assembly according to this invention as each separate circuit requiring switching can have its own two contacts, in the sensor for connection by an electrically conductive path on the activator. Any known expedient can be employed to minimise current passage through the electrically conductive paths and contacts associated therewith. Thus the current may be mimimised by using it 20 to activate electronic switching gates, such as those of a triac for example, or for activating relays.

Where the electrically conductive paths correspond to the ridges or valleys of a persons finger print or the like, the finger print may, for security purposes, be that of an authorised holder of the activator thus permitting immediate security checking by normal finger print comparison procedures with that on the activator.   Also, each finger print, being unique, gives rise to a unique array of conductive paths, at least some of which are automatically isolated from each other particularly where only a part of a finger print is employed.

In the manufacture of a sensor as above defined, it is preferred that the said spaced contacts are mutually adjustably positionable in both of said directions relative to a mounting board to define a contact unit.   Based on the exact array of conductive paths on the activator, the positions of the adjustable contacts may be varied to achieve the required completion of circuits in use, and the contacts can then be permanently fixed in their set positions.   This can be done by fusing, welding, soldering or the like depending on convenience and materials from which the contacts or contact holders and the mounting board are made.

- 8 -

0125848

In order that the invention may be more fully understood, one embodiment of the invention will now be described.

In the following description reference will be made to the accompanying drawings in which :-

Fig. 1 is a plan view of an activator board or card;

Fig. 2 is an exploded perspective view of a co-operant sensor unit;

Fig. 3 is a sectional side elevation of the sensor unit illustrated in Fig. 2 but in a closed condition;

Fig. 4 is a detail, in isometric view, illustrating the association of an activator with a sensor unit;

Fig. 5 is a detail, in isometric view, of a contact assembly embodied in the sensor unit;

Fig. 6 illustrates the application of the sensor to a motor vehicle; and,

Fig. 7 is a schematic block diagram of
the circuit of the motor vehicle
of Fig. 6.

- ` _

In this embodiment of the invention the
activator is in the form of a rectangular printed
circuit board 1 having a complex array of conductive
paths 2 thereon and a row of terminals 3 at its one
end 4 which forms the leading edge in use.  At least
some of these terminals are connected to different
conductive paths as will become apparent from the
following.  Each conductive path associated with a
terminal 3 is substantially electrically isolated from
that associated with the other terminals but bridges
between the paths can be created as and where required.

As indicated above, the conductive paths
may conform to the ridges on a persons finger or thumb
print which has been suitably magnified, and
photographically transferred onto a printed circuit
board, followed by etching in the usual way, and
tinning or the like.

It will be understood that the finger print pattern illustrated in the drawings is, simply for convenience, a simplified version of a real finger print. The average finger print pattern is generally much more complex and some of the conductive paths may intersect thereby causing natural bridges to occur between some conductive paths whilst others do not extend to the leading edge 4 of the activator.

A sensor unit 5 is adapted to releasably receive the activator, leading edge first, through a slot 6 in the front face 7 of the sensor unit.

The front face 7 is carried by a floor 8, conveniently integral therewith, and the floor 8 is shaped to provide locating guides 9 and 10 for the activator. The guides 9 extend transversely to the slot and serve to support the undersurface of the activator in use. These guides are simply in the form of ridges made integral with the floor.

The other guides 10 are located, one along each longitudinal edge 11 of the activator, so as to guide, by means of a portion 12 at right angles to the floor, said longitudinal edges. An inwardly directed lip 13 serves to locate the opperatively upper surface of the activator unit and the surface which, in fact, carries the electrically conductive paths 2.

At the inner end of the guides 9 and 10 there is located a terminal block 14 adapted for co-operation with the row of terminals 3 located along the leading edge 4 of the activator. The terminals of the terminal block may form the contacts for co-operation with these terminals 3 on the activator.

Thus, when an activator is inserted into the slot 6, it is pushed until such time as the leading edge plugs into the terminal block 14 in known manner. The terminal block thus acts as a stop and the guides 9 and 10 serve to locate the activator units in all other directions.

The sensor unit further embodies a mounting board 15 having a series of slots 16 therethrough and extending parallel to the guides 9 and 10. The slots 16 are located directly over the face of the activator 1 when the latter is in an installed position within the sensor unit.

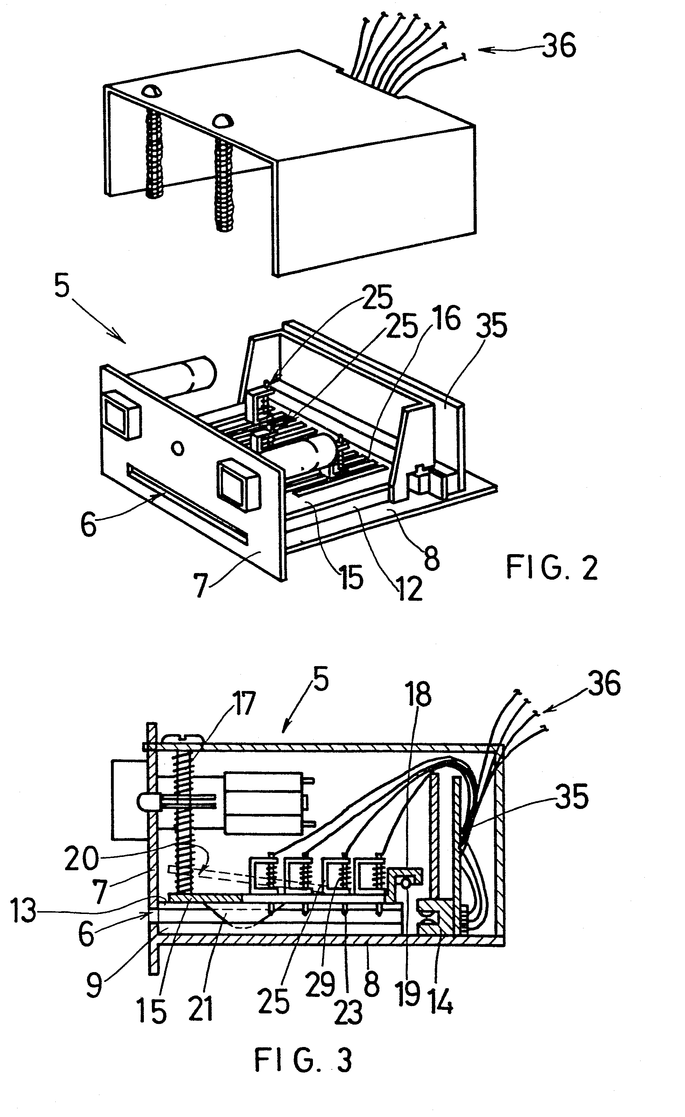

The mounting board is spring biased, by means of springs 17 bearing on the end thereof nearer the slot 6, so that the mounting board 15 lies flush on top of the inwardly directed lips 13 of the guides 10. The rear edge 18 of the mounting board is pivotally mounted by way of journals 19 to be rotatable between a position in which the mounting board is raised, as indicated by dotted lines 20 in Figure 3, and one in which it is supported on the inwardly directed lips as indicated above.

Projecting inwardly past the lips 13 of the guides 10, are a pair of cam members 21 (seen clearly in Figure 3) which thus project into the path of movement of the activator. These cam members ride on the upper surface of the activator during its introduction into the sensor unit and are accommodated within recesses 22 provided in the side edges 11 of the activator unit when it is in its fully installed position.

It will be understood that the above described arrangement holds spring biased contacts 23 supported by the mounting board out of contact with the conductive paths on the activator until such time as the latter is substantially in the installed condition, when the mounting board is allowed to pivot around its journals 19 so that the contacts 23 can engage the conductive paths on the activator.

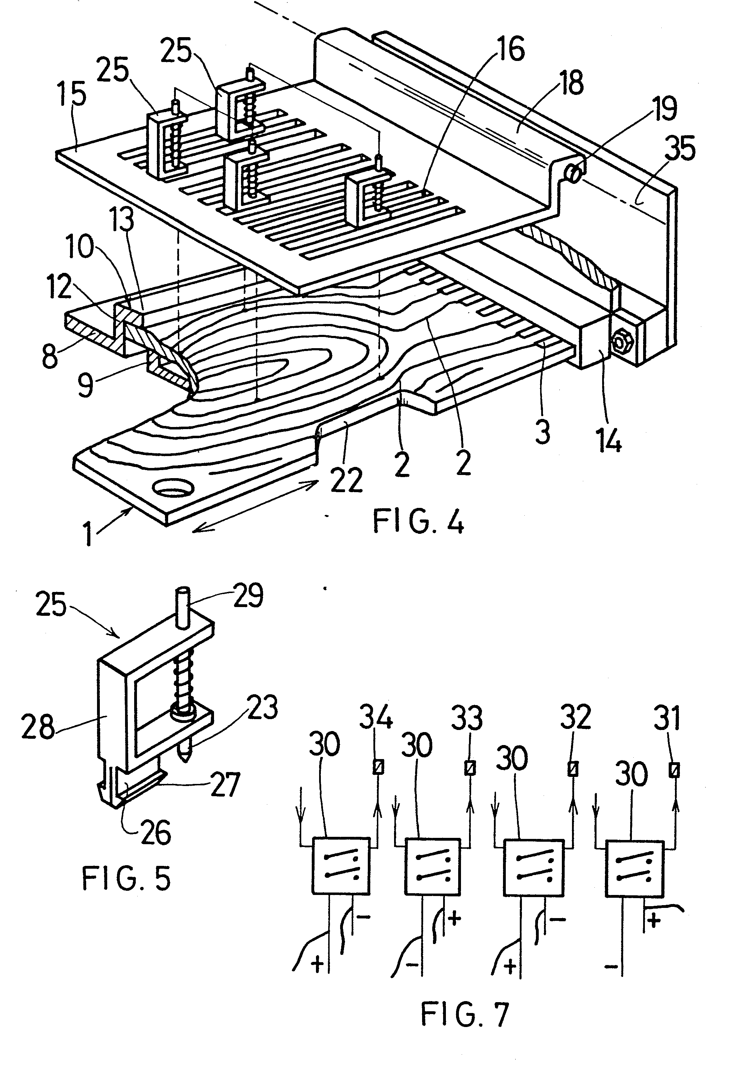

The spring biased contacts 23 are preferably embodied in specially manufactured contact assemblies 25 (illustrated clearly in Figure 5) so that each individual contact assembly can clip into one of the series of parallel slots 16 in the mounting board by means of an integrally moulded foot 26 which has outwardly directed catch formations 27 for engaging the under-surface of the mounting board. An integral body 28, of basically U-shape lying on its side, carries the foot 26 and the contact 23 is defined by one end of an axially slideable conductive pin 29 spring biased towards the activator in the operative position. The pin 29 projects through a slot with the body 28 located on the side of the mounting board opposite the activator.

It will be understood that the spring biased terminals 23 can be adjusted in position, prior to their being fixed, by sliding the contact assembly up and down a selected slot in which it is located, in order to achieve longintudinal spacing from other contacts or the terminal block 14, and by selecting the appropriate slot 16 of the series thereof, transverse spacing of the contact assemblies can be achieved.

The spring biased contacts, and the contacts associated with the terminal block 14, thus provide the contacts which can be inter-connected, generally in pairs thereof, through the medium of the conductive paths on the activator.

Various different possibilities exist. Thus, for example, an input could be by way of a contact in the terminal block into one end of a conductive path 2 from where a take-off can be achieved by way of a first spring biased contact 23 at a position spaced both longitudinally and transversely from the relevant contact of terminal block 14. The first spring biased contact could be connected directly to a required circuit or, alternatively, could be connected to a second spring biased contact which, in turn, will contact with a different conductive path. Thus different conductive path could either be electrically connected to another contact of the terminal block 14 or a third spring biased contact in electrical communication with the same conductive path on the activator. A plurality of breakages in one continuous circuit could thus be provided in series by employing the above described activator and sensor units, for example, by bridging two contacts of terminal block 14. Numerous other possibilities exist and two of the contacts associated with the terminal block could also be inter-connected by the conductive paths by bridging two appropriate conductive paths on the activator itself

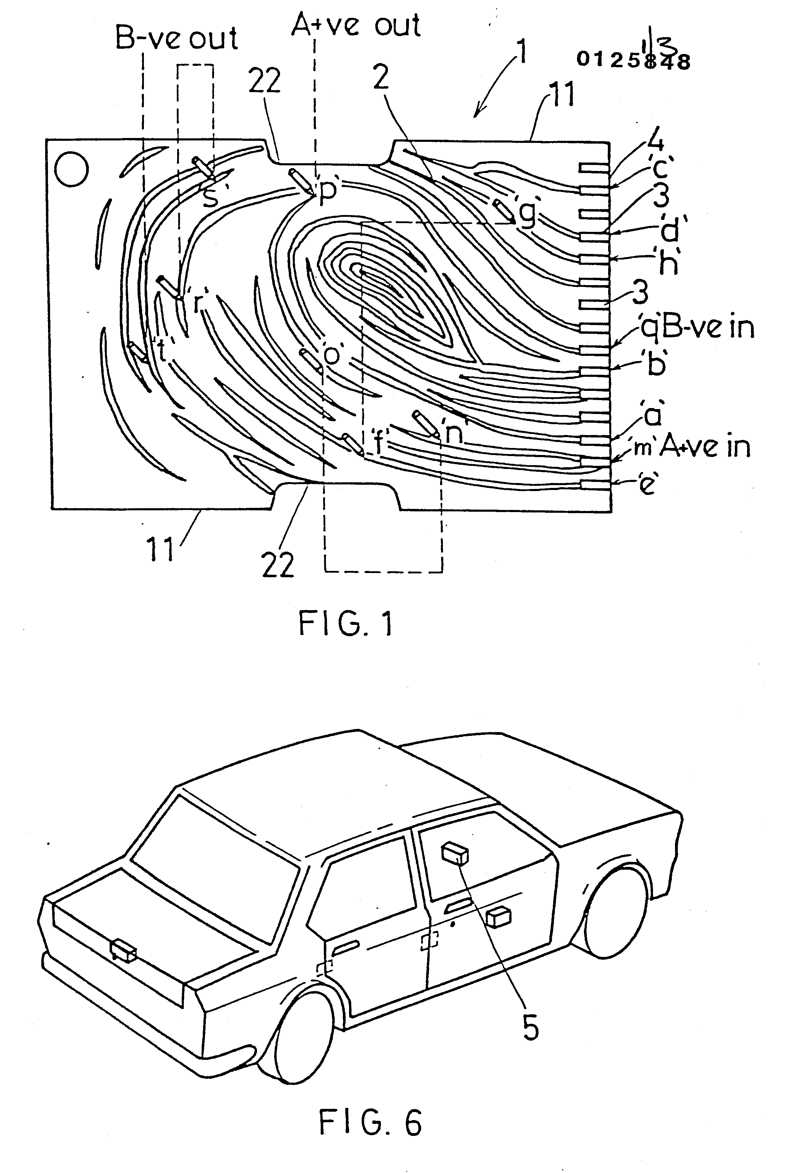

Thus, for example, as shown in Figure 1, a positive input through the terminal block could communicate, via the terminal block with a terminal "a" on the activator unit and that could be bridged with terminal "b" on the activator unit as by a permanent bridge. The terminal "b" could be connected to a contact in the terminal block connected directly to supply a coil of a relay, for example.

A more complex path can be created, for example to energise a further relay coil or electronic switch. This complex switching path by way of the activator can commence at a contact of the terminal block co-operating with a terminal "c" on the activator which is bridged permanently to a terminal "d" of the activator. The latter, in operation, communicates with a contact of the terminal block which is permanently bridged to a further contact thereof. The co-operating terminal "e" of the activator unit is connected to a conductive path which contacts with one of the contact assemblies "f" carried by the mounting board of the sensor and which is permanently bridged to a second contact assembly "g" which communicates with a further terminal "h" of the activator unit. The terminal "h" communicates, in use, with a contact in the terminal block to close a circuit in use.

Futher and more preferable alternatives are as follows. A positive line "A-A" and a negative line "B-B" are closed by operative co-operation between the activator in the sensor unit. In this case a terminal "m" of the activator co-operates with a contact in the terminal block of the sensor and a biased contact assembly "n" is electrically connected thereto via a conductive path. The latter contact "n" is bridged to another "o" which is connected by a conductive path of the activator to a a third biased contact "p". This contact "p" defines the actual output contact thus removing it entirely from the terminal block. Similarly, the path of the negative line is from terminal "q" to biased contact "r", bridged to biased contact "s" thence to the output contact "t". Clearly, numerous other possibilities exist

Any of the above switching arrangements from the contacts of the terminal block or the biased contacts can be employed to switch various circuits. In particular various circuits may be switched simultaneously and, for example, as illustrated in Figure 7, for relays indicated by numeral 30 in Figure 7 could be switched simultaneously. These relays could be embodied in four different electrical circuits of a motor vehicle (illustrated in Figure 6) in which a sensor unit 5 is embodied in the electrical system. In such an application the four relays 30 can be employed for switching four separate circuits and these may be an ignition circuit 31, an alarm circuit 32, a lights and other electrical accessories circuit 33, and a door locking circuit 34.

It is within the scope of this invention for a second and a different activator unit to be provided for co-operation with a sensor so that only the ignition circuit is energized for example for the purposes of allowing the vehicle to be services or treated at a garage where the other facilities are not required. This is considered to be a security precaution as a car is unlikely to be stolen where only the ignition circuit is in operation and that the other electrical circuits are not.

In order to facilitate the connecting of the various contacts of the terminal block and the biased contacts to their required circuits, a connection board 35 is preferably provided behind the terminal block. All the required connections can then be soldered to the various contacts, wires and the like to provide connections to the various input leads 36 to the sensor units.

It will be understood that a highly complex, and accordingly secure, activator and sensor assembly can be constructed according to the above described invention. Also, if required, two or more sensors could be adapted for co-operation with a single activator as, in general, the contact assemblies associated with the mounting board are adjusted after manufacture of the activator itself. Thus two or more sensors can be adjusted by locating the biased contact assemblies in the correct slot and adjusting them in position to correspond with the required conductive paths on the activator unit in identical manner. After the contact assemblies have been properly located they are fixed in position relative to the mounting board by melting, welding or in any other suitable manner as indicated above.

In order to increase security, any unused terminals of the terminal block, of which there will generally be a reasonable number, can be connected to a chosen polarity or, in fact, half could be connected to one polarity and half to another. In combination with an alarm circuit, an alarm could be triggered if the two types of polarity are short circuited. Indeed, any short circuit between two contacts or terminals of opposite polarity is adapted to trigger an alarm of such a nature. Any such alarm may be an audible alarm, a radio operated alarm or even a light flashing arrangement or any combination thereof.

The activator and sensor arrangement can also be employed to operate any other access control means or to arm or disarm an alarm circuit as may be required.

It will be understood that numerous variations may be made to the above described embodiment of the inventions without departing from the scope hereof. In particular the means whereby the biased contacts can be located at positions spaced in the longitudinal and transverse directions relative to the activator can be varied widely. Indeed it is within the scope of this invention that such biased contacts can be simply located on a suitable mounting board by magnetic means, pressure sensitive adhesive means or the like and, after location in the required position, can simply be fused, welded or otherwise adhered to the board in a permanent manner after adjustment thereof.

The invention therefore provides an extremely useful and highly secure activator and co-operate sensor arrangement.

CLAIMS

1.  An activator (having both a longitudinal and transverse dimension) and co-operant sensor assembly, the activator being removably receivable by the sensor and having a surface thereof carrying a planar array of electrically conductive paths thereon, at least some of which are electrically isolated from others, the sensor having at least two contacts for engagement with said electrically conductive paths to close a circuit between said contacts when the activator is received in the sensor, at least one of said contacts being located in a spaced position relative to the other contact in the directions of both the longitudinal and transverse dimensions of the activator.

2.    An assembly as claimed in claim 1 in which the array of electrically conductive paths is unique in respect of any one or more predetermined sensors.

3.    An assembly as claimed in either of claims 1 or 2 in which the electrically conductive paths correspond to the ridges or valleys of at least a part of a persons finger print or print of another area of a persons skin.

4.    An assembly as claimed in either of claims 1 or 2 in which the array of electrically conductive paths is generated randomly by a computer.

5.    An assembly as claimed in any one of the preceding claims in which the activator is in the form of a flat electrically insulating card or board carrying the conductive paths on a major face thereof.

6. An assembly as claimed in claim 5 in which the board or card is a printed circuit board.

7. An assembly as claimed in claim 6 in which the array of conductive paths is formed by the photographic transfer of the required pattern onto a printed circuit board followed by etching to remove unwanted areas of conductive material.

8. An assembly as claimed in any one of the preceding claims in which a row of terminals is provided at a leading end of the activator with at least some of such terminals being electrically connected to at least some of the electrically conductive paths, said terminals being in operative co-operation with contact terminals on the sensor.

9. An assembly as claimed in any one of the preceding claims in which a plurality of pairs of contacts are provided on the sensor with the members of each pair being electrically interconnected to close a circuit in use.

10.     An assembly as claimed in any one of the preceding claims in which one or more contacts of the sensor are carried by a contact unit biased towards the activator surface having the conductive paths and wherein cam and cam follower formations are provided to maintain the contacts out of physical contact with the conductive paths during movement of the activator into and out of the sensor but to allow electrical contact in the fully installed position of the activator.

11.     An assembly as claimed in any one of the preceding claims in which two or more pairs of contacts are adapted to be interconnected in series by two or more of said electrically conductive paths in the operative position.

12.     An assembly as claimed in any one of the preceding claims in which a plurality of pairs of contacts are included in the sensor and are arranged to close a plurality of parallel circuits simultaneously.

13.    An assembly as claimed in claim 12 in which the plurality of circuits are a plurality of circuits of a motor vehicle electrical system.

14.    An assembly as claimed in either of claims 12 or 13 in which at least one pair of contacts is connected to arm or disarm a security alarm.

15.    An assembly as claimed in any one of the preceding claims in which the assembly is connected to switch the circuit of a relay or electronic switching device.

16.    An assembly as claimed in claim 1 and substantially as herein described.

17.    An assembly as claimed in claim 1 and substantially as herein exemplified with reference to the accompanying drawings.

18.    An activator adapted to co-operate with a sensor to form an assembly as defined in any one of claims 1 to 17.

19.    A sensor adapted to co-operate with an activator to form an assembly as defined in any one of claims 1 to 17.

20.    A sensor as claimed in claim 19 and wherein at least one contact is adjustable in position therein and is capable of being fixed in position once adjusted to a position corresponding to a required conductive path on a co-operating activator.

21.    The features herein described, or their equivalents, in any patentably novel selection.

**FIG. 1**

0125848

**FIG. 6**

FIG. 2

FIG. 3

0125848

FIG. 4

FIG. 5

FIG. 7